# EUROPÄISCHE PATENTSCHRIFT

(11) **EP 3 132 921 B1**
(45) Veröffentlichungstag und Bekanntmachung des Hinweises auf die Patenterteilung: **26.06.2019**
(21) Anmeldenummer: 16182122.8
(22) Anmeldetag: 01.08.2016
(51) Int. Cl.: B29C 67/00, B33Y 80/00, B33Y 50/02, F16B 13/00, E04B 1/38, G01B 11/00, G01B 11/24, A61C 13/00, F16B 1/00, G06F 17/50

(54) **SYSTEM UND VERFAHREN ZUR ERSTELLUNG EINER BEFESTIGUNGSANORDNUNG MITTELS ADDITIVEN FERTIGUNGSVERFAHREN**
SYSTEM AND METHOD FOR CREATING A FASTENING ARRANGEMENT USING ADDITIVE MANUFACTURING TECHNIQUES
SYSTEME ET PROCEDE DE CREATION D'UN SYSTEME DE FIXATION FAIT PAR FABRICATION ADDITIVE

(30) Priorität: 20.08.2015 DE 102015113807
(43) Veröffentlichungstag der Anmeldung: 22.02.2017
(73) Patentinhaber: fischerwerke GmbH & Co. KG, 72178 Waldachtal (DE)
(72) Erfinder: Suchy, Ulrich, 72250 Freudenstadt (DE)
(74) Vertreter: Suchy, Ulrich Johannes

(56) Entgegenhaltungen:
- DE-A1-102012 111 556
- GB-A- 2 434 541
- US-A1- 2003 164 952

## Beschreibung

Die Erfindung betrifft ein System und ein Verfahren zur Erstellung einer Befestigungsanordnung gemäß Ansprüchen 1 und 6.

Bei der Befestigung von Befestigungsgegenständen an einem Befestigungsgrund gibt es zahlreiche Situationen, bei denen erst vor Ort bei der Erstellung der Befestigungsanordnung eine Lösung gefunden wird, zum Beispiel wenn eine Fassade oder eine Trockenbauwand an einem unregelmäßigen Befestigungsgrund zu befestigen ist, oder wenn der Befestigungsgegenstand unüblich ist, wie beispielsweise ein Kunstwerk im Sinne einer künstlerischen Installation oder dergleichen. Die Erstellung der Befestigungsanordnung ist in diesem Fall häufig aufwändig und erfordert viel Geschick durch den Ausführenden.

Aufgabe der Erfindung ist, für derartige Situationen eine Vereinfachung zu schaffen. Diese Aufgabe wird erfindungsgemäß durch das System mit den Merkmalen des Anspruchs 1 und durch das Verfahren mit den Merkmalen des Anspruchs 6 gelöst.

Das erfindungsgemäße System umfasst mindestens ein Sensorsystem, ein rechnergestütztes Expertensystem und einen 3D-Drucker. Das erfindungsgemäße Verfahren zur Erstellung einer Befestigungsanordnung erfolgt insbesondere unter Verwendung eines derartigen Systems.

Das Sensorsystem dient der sensorischen Erfassung von Situationsdaten einer Befestigungssituation. Die Erfassung muss nicht ausschließlich sensorisch erfolgen, sondern kann auch durch Bedienereingaben ergänzt werden. Mit einer "Befestigungssituation" ist sowohl die Ausgangs- als auch die Sollsituation bei der Befestigung gemeint. Sie betrifft den Befestigungsgrund, der durch eine Wand, eine Decke, einen Boden oder einen sonstigen Baukörper gebildet wird. Im Folgenden werden noch beispielhaft weitere Aspekte der Befestigungssituation genannt. Das Sensorsystem muss dabei nicht umfassend alle möglichen Daten der Befestigungssituation erfassen, sondern kann sich auf einzelne Daten, beispielsweise die Ausgangsgeometrie des Befestigungsgrunds, beschränken. Die erfassten Daten werden als Situationsdaten erfasst und insbesondere als Situationsdatensatz digital gespeichert.

In Abhängigkeit von den Situationsdaten erzeugt ein rechnergestütztes Expertensystem als Teil des erfindungsgemäßen Systems digitale Elementdaten eines Elements zur Befestigung. Das rechnergestützte Expertensystem greift dabei insbesondere auf eine Datenbank zurück, wobei die Datenbank nicht physisch mit dem Rechner verbunden sein muss, auf dem das Expertensystem läuft, sondern beispielsweise über eine mobile Internet-Verbindung gekoppelt sein kann. Das Element zur Befestigung kann alleine der Befestigung dienen, beispielsweise als Steckdübel mit angeformten Haken, kann aber auch zusammen mit weiteren Hilfselementen verwendet werden, worauf noch eingegangen wird. Auch ist es möglich, dass das Element zur Befestigung lediglich der Montage des Befestigungsgegenstands am Befestigungsgrund dient, ohne selbst tragende Wirkung zu haben. In diesem Fall kann das Element zur Befestigung an der Befestigungsanordnung verbleiben oder sogar entfernt werden, ist also lediglich Montagehilfsmittel. Beispielsweise kann eine Reihe unterschiedlich langer Stäbe als Montagehilfsmittel erzeugt werden, die dazu genutzt wird, ein flexibles Profil an einer grob behauenen Natursteinmauer in einer exakten Kreisform zu halten, bis das Profil mit Dübeln und Schrauben oder einem Montageschaum endgültig an der Natursteinmauer fixiert wird.

Von einem 3D-Drucker wird das mindestens eine Element zur Befestigung in Abhängigkeit von den Elementdaten erzeugt. Der Begriff "3D-Drucker" steht hier für Geräte, die im additiven Verfahren durch sukzessives Hinzufügen und Ablagern von Material Bauteile herstellen, insbesondere aus Kunststoffen. Bekannt sind jedoch auch 3D-Drucker, die andere Materialien wie Metalle verarbeiten. Das Vorhalten teurer und geometrisch unflexibler Spritzgusswerkzeuge entfällt, außerdem kann die Erzeugung des Elements zur Befestigung praktisch unmittelbar nach der Bereitstellung der Elementdaten und gegebenenfalls vor Ort begonnen werden.

Nach der Erstellung des Elements zur Befestigung wird der Befestigungsgegenstand am Befestigungsgrund unter Verwendung des Elements montiert.

Das System und das Verfahren haben den Vorteil, dass eine aufwendige geometrische Erfassung, beispielsweise Vermessung, und vor allem die entsprechende Anpassung der Befestigungsanordnung, die bisher häufig viel Zeit, Aufwand und Geschick erfordert, automatisiert erfolgt und damit erheblich vereinfacht ist.

Vorzugsweise umfassen die vom Sensorsystem erfassten Situationsdaten mindestens Informationen über den Befestigungsgrund, den Soll-Abstand, die Soll-Position und/oder die Geometrie des Befestigungsgegenstands. Bezüglich des Befestigungsgrundes kann beispielsweise die Oberflächengeometrie, die Position von einem oder mehreren Bohrlöchern und/oder die Geometrie dies Bohrlochs selbst erfasst werden. Auch kann eine Referenzposition, die der Benutzer vorgibt, erfasst werden. Dies schließt auch ein, dass der Bediener, insbesondere mit Hilfsmitteln, vertikale und/oder horizontale Linien zur Referenzierung beziehungsweise Kalibrierung des Systems vorgibt. Ergänzend oder alternativ zu diesen Geometriedaten können Informationen über den Baustoff des Befestigungsgrunds mit dem Sensorsystem erfasst werden, beispielsweise über eine optische Analyse von Bohrmehl. Bezüglich des Soll-Abstands und der Soll-Position des Befestigungsgegenstands relativ zum Befestigungsgrund kann dies insbesondere mit Hilfsmitteln, wie besonders ausgebildeten Zeigegeräten, erfolgen. Beispielswiese können Laser zur Projektion eines Netzes aus vertikalen und horizontalen Linien auf einem unebenen Befestigungsgrund in Kombination mit Zeigestiften zum Anzeigen von Sollpositionen als derartige Zeigegeräte genutzt werden. Bezüglich der Geometrie des Befestigungsgegenstands kann insbesondere die Rückseite erfasst werden, beispielsweise um die Position und Geometrie von Hinterschnitten und/oder Auflagerpunkten für die Befestigung zu erfassen. Als "Rückseite" wird hier die im fertig montierten Befestigungszustand dem Befestigungsgrund zugewandte Seite verstanden. Auch von einer anderen Seite, insbesondere von der der Rückseite gegenüberliegenden Vorderseite, können bei manchen Befestigungsgegenständen Aufnahmepositionen beispielsweise in Form eines Lochbilds erfassbar sein.

Vorzugsweise weist das Sensorsystem und/oder das Expertensystem eine Ein- und Ausgabeeinheit für den Bediener auf. Mit dieser Ein- und Ausgabeeinheit kann der Bediener bei der Durchführung des erfindungsgemäßen Verfahrens geleitet werden und Angaben, wie zum Beispiel gewünschte Haltekräfte, vorhandene Hilfsmittel, SollPositionen oder Soll-Abstände, erfassen.

Mit Hilfe der Ausgabeeinheit, die auch einen Drucker umfassen kann, wird vorzugsweise durch das Expertensystem eine Montageanleitung erstellt. Diese Montageanleitung dient der Erstellung der Befestigungsanordnung und wird in Abhängigkeit von den Situationsdaten und Elementdaten generiert. Beispielsweise kann die Montaganleitung angeben, welches Abstandselement, das als Element zur Befestigung vom 3D-Drucker erstellt wurde, an welcher Stelle zu montieren ist und wie mehrere Abstandselemente über Profile zu einer Unterkonstruktion für eine Gipskartonwand zu ergänzen sind.

Bei der Montage des Befestigungsgegenstands am Befestigungsgrund kommen vorzugsweise zusätzlich zu den per 3D-Drucker erzeugten Elementen zur Befestigung auch Hilfselemente zum Einsatz, die nicht durch den 3D-Drucker erzeugt sind, insbesondere Dübel, Schrauben, Muttern, Haken, aushärtbare Massen, Abstandshalter, Profile, Streben und/oder Isolierelemente.

Das Sensorsystem weist vorzugsweise eine Kamera, einen Laserscanner, ein Endoskop und/oder einen Taster auf. Die Kamera kann beispielsweise Teil eines Mobiltelefons oder eines mobilen Rechners sein. Es ist bekannt, dass derartige Mobiltelefone oder Rechner heute bereits über Software verfügen, die eine dreidimensionale Objekterfassung (3D-Scannen) erlauben. Ein Endoskop kann beispielsweise dazu dienen, die Geometrie eines Bohrlochs zu erfassen. Dies gilt auch für einen Taster.

Das Sensorsystem kann erfindungsgemäß auch oder ausschließlich dazu genutzt werden, als Situationsdaten Geometriedaten einer der oben genannten Hilfselemente zu erfassen. Auch in diesem Fall erfolgt die Erzeugung der Elementdaten in Abhängigkeit der Geometriedaten. Beispielsweise kann ein Dübel als Element zur Befestigung auf der Basis einer speziellen Schraube als Hilfselement erzeugt werden. Zusätzlich kann ein Bohrloch geometrisch erfasst werden. Der Dübel kann auf diese Weise sowohl in Hinblick auf das Bohrloch als auch die Schraube angepasst sein.

Grundsätzlich können das Sensorsystem, das Expertensystem und der 3D-Drucker getrennte Geräte sein, die beispielsweise lediglich über Kabel, Funk, eine Internetverbindung oder den Austausch von Datenträgern miteinander kommunizieren. Insbesondere kann es sinnvoll sein, den 3D-Drucker, der möglicherweise sperrig ist und auch für andere Aufgaben genutzt wird, räumlich getrennt aufzustellen. Vorzugsweise sind jedoch das Expertensystem und zumindest Teile des Sensorsystems in einem Gerät, insbesondere einem Mobiltelefon oder einem mobilen Rechner, integriert. Insbesondere eine Recheneinheit des Sensorsystems ist vorzugsweise in diesem einen Gerät integriert, wärend die Messwertaufnahme, beispielsweise ein Taster, auch physisch getrennt und über eine Funkverbindung gekoppelt sein kann. Die Integration hat den Vorteil, dass das System kompakt und vorhandene Rechenkapazität, insbesondere bei einem ohnehin vorhandenen Mobiltelefon oder Tablet-PC, genutzt werden kann.

Gemäß dieser Offenbarung wird mit dem Verfahren eine Befestigungsanordnung erzeugt, die ein Element zur Befestigung umfasst, welches eine Haltefläche aufweist. Diese Haltefläche weist einen nicht-ebenen Flächenabschnitt auf, der mit dem Befestigungsgrund korrespondiert. Hierzu wird die Oberfläche des Befestigungsgrunds im Flächenabschnitt mit dem Sensorsystem geometrisch erfasst (gescannt) und ein Befestigungselement mit korrespondierender Haltefläche durch den 3D-Drucker erzeugt. Die Haltefläche entspricht insbesondere der Negativform des Flächenabschnitts. Die Haltefläche ist insbesondere zwischen 1 und 400 cm², vorzugsweise zwischen 4 und 100 cm², groß.

Die Erfindung wird nachfolgend anhand dreier Ausführungsbeispiele erläutert.

Es zeigen:
- Figur 1: ein Ablaufdiagramm für ein erstes Ausführungsbeispiel;
- Figur 2: den Schritt der Erfassung von Situationsdaten bei einem zweiten Ausführungsbeispiel; und
- Figur 3: die Erstellung eines Dübels aus Daten zum Befestigungsgrund und zu einer Schraube als Hilfselement.

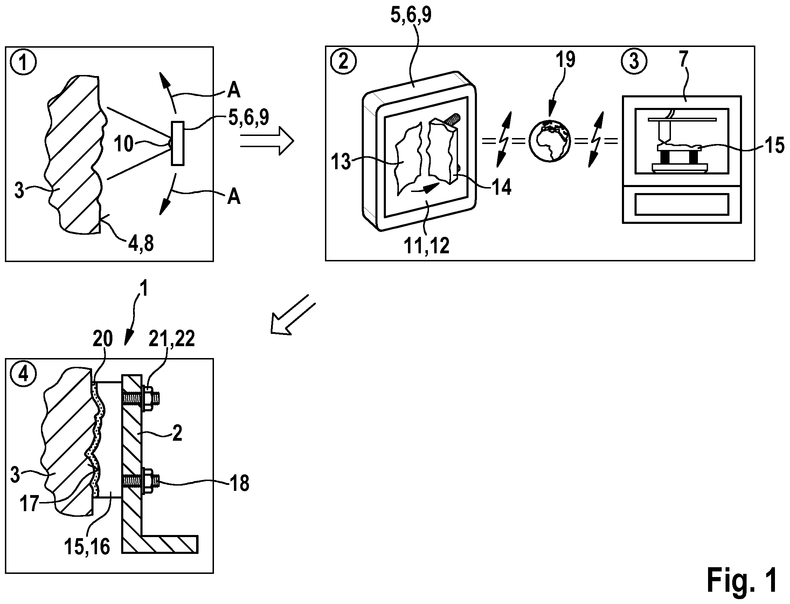

Das anhand des Ablaufdiagramms in Figur 1 dargestellte erfindungsgemäße Verfahren dient der Erstellung einer Befestigungsanordnung 1, bei der ein L-förmiger Befestigungsgegenstand 2 an einem Befestigungsgrund 3 mit nicht-ebener Befestigungsfläche 4 befestigt werden soll. Hierzu wird das erfindungsgemäße System verwendet, das aus einem Sensorsystem 5, einem rechnergestützten Expertensystem 6 und einem 3D-Drucker 7 besteht.

In einem ersten Schritt wird ein nicht-ebener Flächenabschnitt 8 der Befestigungsfläche 4 mit dem Sensorsystem 5 erfasst. Das Sensorsystem 5 ist mit dem Expertensystem 6 in einem Gerät, nämlich einem Tablet-PC als mobilen Rechner 9 mit einer Kamera 10 integriert. Der mobile Rechner 9 weist eine Ein-/Ausgabeeinheit 11 in Form eines berührungsempfindlichen Bildschirms 12 auf. Der Bediener (nicht dargestellt) wird durch das Sensorsystem 5 durch Bilder, Videos, Text und/oder Methoden der sogenannten Augmented Reality bei der Erfassung von Situationsdaten 13 der Befestigungssituation, hier ein 3D-Modell des Flächenabschnitts 8, unterstützt. In diesem Fall wird das Sensorsystem 5 entlang der Pfeile A hin und her bewegt, während die Kamera 10 auf den Flächenabschnitt 8 gerichtet ist. Die gesammelten Bilddaten werden von dem Sensorsystem 5 zu den Situationsdaten 13 verarbeitet. Hierzu sind bekannte Algorithmen zu verwenden.

In einem zweiten Schritt werden in Abhängigkeit von den Situationsdaten 13 durch das Expertensystem 6 digitale Elementdaten 14 in Form eines CAD-Modells eines Elements 15 zur Befestigung erzeugt. Das Element 15 hat einen flächigen Grundkörper 16 mit einer Haltefläche 17, deren Geometrie der Negativform des Flächenabschnitts 8 entspricht. Der Haltefläche 17 abgewandt stehen vom Grundkörper 16 zwei Gewindebolzen 18 ab. Über eine mobile Internetverbindung 19 werden die Elementdaten 14 zum 3D-Drucker 7 übertragen, der in einem dritten Schritt des Verfahrens das reale Element 15 aus Kunststoff erzeugt. Der 3D-Drucker 7 kann unmittelbar vor Ort im Bereich der späteren Befestigungsanordnung 1 stehen, kann jedoch auch hiervon entfernt aufgestellt sein.

Im vierten und letzten Schritt wird der Befestigungsgegenstand 2 am Befestigungsgrund 3 unter Verwendung des Elements 15 montiert. Hierzu wird ein Kleber 20 auf die Haltefläche 17 aufgebracht und das Element 15 auf den Flächenabschnitt 8 aufgeklebt. Aufgrund der korrespondierenden Geometrie von Haltefläche 17 und Flächenabschnitt 8 ergibt sich ein besonders guter Halt. An den Gewindebolzen 18 kann in bekannter Weise mit Muttern 21 der Befestigungsgegenstand 2 angeschraubt werden. Die Muttern 21 stellen Hilfselemente 22 für die erfindungsgemäße Montage der Befestigungsanordnung 1 dar. Für die Montage erzeugt das Expertensystem 6 eine Montageanleitung (nicht dargestellt) in Form einer digitalen Darstellung der notwendigen Montageschritte, inklusive Hinweisen zur Wahl des richtigen Klebers 20.

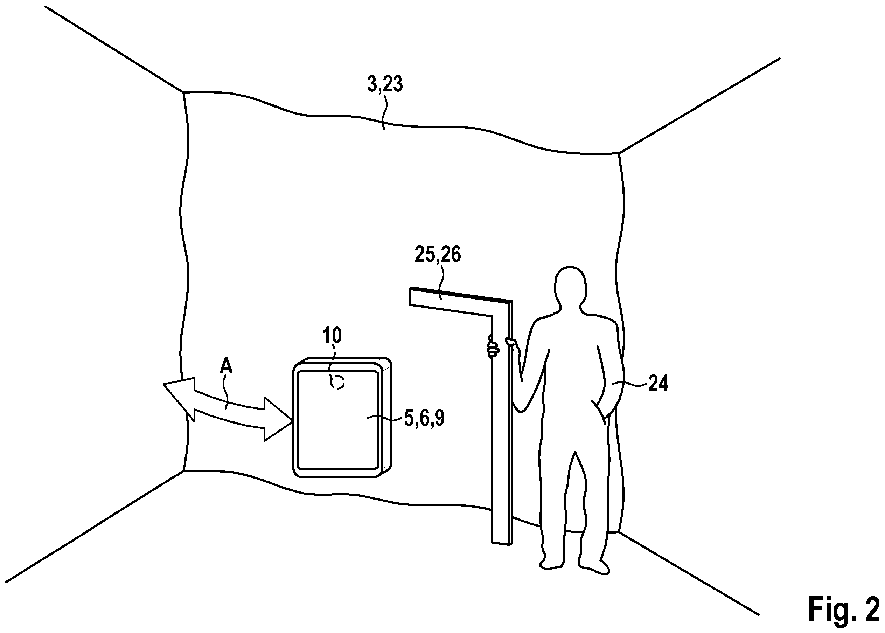

In dem in Figur 2 dargestellten zweiten Ausführungsbeispiel soll an einer unebenen Wand 23 als Befestigungsgrund 3 eine nicht dargestellte Gipskartonwand mit Unterkonstruktion als Befestigungsgegenstand 2 befestigt werden. Hierzu wird im ersten Schritt von einem Sensorsystem 5, hier wieder ein mobiler Rechner 9 mit Kamera 10, die Befestigungssituation erfasst, hier die Oberflächengeometrie der Wand 23. Ein erster, nicht dargestellter Bediener bewegt hierzu das Sensorsystem entsprechend Pfeil A, ein zweiter Bediener 24 hält ein Hilfsmittel 25 in Form eines L-förmigen Metallwinkels 26 mit eingebauter Wasserwaage (nicht dargestellt). Das Hilfsmittel 25 liefert dem Sensorsystem 5 vertikale und horizontale Linien zur Justierung des dreidimensionalen Modells der Befestigungssituation, also der Situationsdaten. Weiterhin "zeigt" der zweite Bediener mit dem Hilfsmittel 25 die Sollposition und Sollorientierung beziehungsweise den Sollabstand der späteren Gipskartonwand von der Wand 23. In Abhängigkeit von diesen Situationsdaten werden vom Expertensystem 6 Elementdaten von einer Vielzahl unterschiedlich dicker Abstandshalter (nicht dargestellt) als Elemente zur Befestigung erzeugt. Diese werden von einem 3D-Drucker (nicht dargestellt) erzeugt und anhand einer vom Expertensystem 6 erzeugten Montageanleitung gezielt an die Kreuzungspunkte eines zuvor aus Profilen montierten Profilgitters (nicht dargestellt) gesteckt, das dann in dem gewünschten Abstand an der Wand 23 mit Schrauben und Dübel befestigt werden kann. Die Abstandshalter bilden jeweils die Verbindung zwischen der Wand 23 und dem Profilgitter.

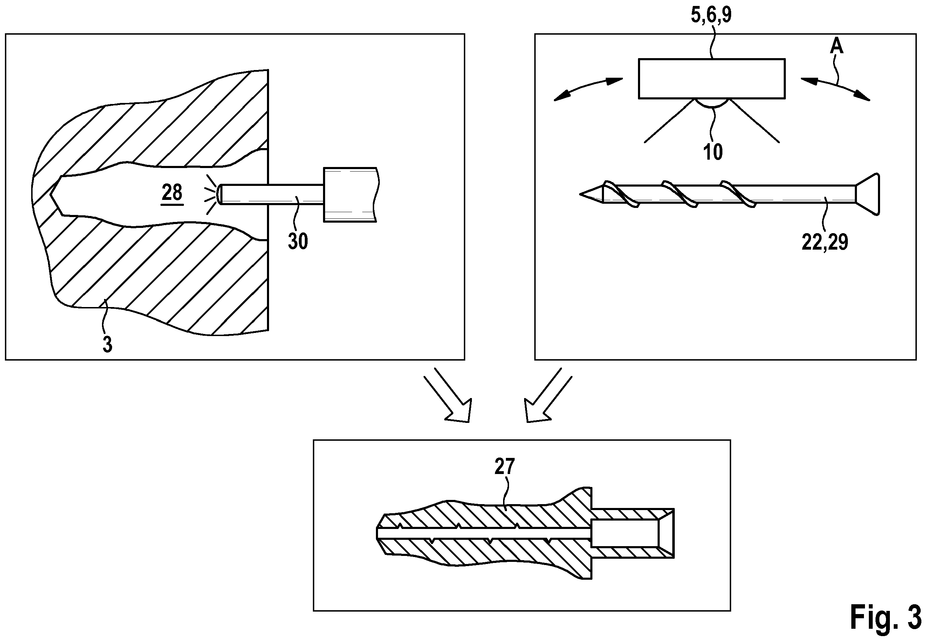

Im dritten Ausführungsbeispiel, von dem nur Teilschritte in Figur 3 dargestellt sind, ist das Ziel die Schaffung eines Dübels 27 als Element 15 zur Befestigung. Der Dübel 27 soll einerseits auf ein Bohrloch 28 und andererseits auf eine vorhandene Schraube 29 als Hilfselement 22 angepasst sein. Dazu wird im ersten Schritt einerseits die Bohrlochgeometrie und anderseits die Schraubengeometrie erfasst. Die beiden Geometriedaten bilden zusammen die Situationsdaten der Befestigungssituation des dritten Ausführungsbeispiels. Zur Erfassung der Bohrlochgeometrie weist das Sensorsystem 4 ein Endoskop 30 mit integrierter Optik und Messtechnik auf. Die Schraube 29 wird mit der Kamera 10 eines mobilen Rechners 9 wie in den anderen beiden Ausführungsbeispielen erfasst. Der mobile Rechner 9 integriert das Expertensystem 6 und zumindest einen Teil des Sensorsystems 5. Das Endoskop 30, das ebenfalls Teil des Sensorsystems 5 ist, ist über eine Funkverbindung mit dem mobilen Rechner 9 verbunden. Aus den Situationsdaten erzeugt das Expertensystem 6 die Elementdaten 14 für den Dübel 27, der von einem nicht dargestellten 3D-Drucker hergestellt wird. Der Dübel 27 ist dabei auf seiner Außenseite an die Bohrlochgeometrie und in seinem Inneren an die Schraube 29 angepasst, so dass die Schraube 29 leicht eingeschraubt und der Dübel 27 maximalen Halt im Befestigungsgrund 3 finden kann. Zur Definition der Dübelgeometrie greift das Expertensystem 6 auf eine externe, über das Internet verbundene Datenbank zu.

### Bezugszeichenliste

- 1: Befestigungsanordnung
- 2: Befestigungsgegenstand
- 3: Befestigungsgrund
- 4: Befestigungsfläche
- 5: Sensorsystem
- 6: Expertensystem
- 7: 3D-Drucker
- 8: Flächenabschnitt
- 9: mobiler Rechner
- 10: Kamera
- 11: Ein-/Ausgabeeinheit
- 12: Bildschirm
- 13: Situationsdaten
- 14: Elementdaten
- 15: Element zur Befestigung
- 16: Grundkörper
- 17: Haltefläche
- 18: Gewindebolzen
- 19: mobile Internetverbindung
- 20: Kleber
- 21: Mutter
- 22: Hilfselement
- 23: Wand
- 24: zweiter Bediener
- 25: Hilfsmittel
- 26: Metallwinkel
- 27: Dübel
- 28: Bohrloch
- 29: Schraube
- 30: Endoskop
- A: Pfeil

## Patentansprüche

1. System zur Erstellung einer Befestigungsanordnung (1) mit einem Befestigungsgegenstand (2) an einem Befestigungsgrund (3), wobei der Befestigungsgrund (3) eine Wand, eine Decke, ein Boden oder ein sonstiger Baukörper ist, aufweisend
- ein Sensorsystem (5) zur sensorischen Erfassung von Situationsdaten (13) einer Befestigungssituation,
- ein rechnergestütztes Expertensystem (6) zur Erzeugung digitaler Elementdaten (14) eines Elements (15) zur Befestigung in Abhängigkeit der Situationsdaten (13) und
- einen 3D-Drucker (7) zur Erzeugung des Elements (15) zur Befestigung in Abhängigkeit von den Elementdaten (14), wobei das Sensorsystem (5) zur Erfassung von Situationsdaten (13) geeignet ist, die Informationen umfassen über
- den Befestigungsgrund (3), insbesondere eine Oberflächengeometrie und/oder eine Bohrlochposition und/oder eine vom Benutzer vorzugebende Referenzposition und/oder eine Bohrlochgeometrie und/oder eine Baustoffart, und/oder
- einen vom Benutzer vorzugebenden Soll-Abstand vom und/oder Soll-Postion am Befestigungsgrund (3) für den Befestigungsgegenstand (2).

2. System nach Anspruch 1, **dadurch gekennzeichnet, dass** das Sensorsystem (5) und/oder das Expertensystem (6) eine Ein- und Ausgabeeinheit (11) für den Bediener aufweist.

3. System nach Anspruch 1 oder 2, , **dadurch gekennzeichnet, dass** das Sensorsystem (5) eine Kamera (10), einen Laserscanner, ein Endoskop (30) und/oder einen Taster aufweist.

4. System nach einem der vorstehenden Ansprüche, **dadurch gekennzeichnet, dass** das Expertensystem (6) und zumindest Teile des Sensorsystems (5) in einem Gerät, insbesondere einem Mobiltelefon oder einem mobilen Rechner (9), integriert sind.

5. System nach einem der vorstehenden Ansprüche, **dadurch gekennzeichnet, dass** das Expertensystem (6) zur Erstellung einer Montageanleitung für die Erstellung der Befestigungsanordnung (1) in Abhängigkeit von den Situationsdaten (13) und Elementdaten (14) geeignet ist.

6. Verfahren zur Erstellung einer Befestigungsanordnung (1) mit einem Befestigungsgegenstand (2) an einem Befestigungsgrund (3), wobei der Befestigungsgrund (3) eine Wand, eine Decke, ein Boden oder ein sonstiger Baukörper ist, insbesondere unter Verwendung eines Systems nach einem der vorstehenden Ansprüche, mit den nachfolgenden Schritten:
- sensorische Erfassung von Situationsdaten (13) einer Befestigungssituation mit einem Sensorsystem (5),
- Erzeugung digitaler Elementdaten (14) eines Elements (15) zur Befestigung in Abhängigkeit der Situationsdaten (13) mit einem rechnergestützten Expertensystem (6),
- Erzeugung eines Elements (15) zur Befestigung in Abhängigkeit von den Elementdaten (14) mit einem 3D-Drucker (7),
- Montage des Befestigungsgegenstands (2) am Befestigungsgrund (3) unter Verwendung des Elements (15) zur Befestigung.

7. Verfahren nach Anspruch 6, **dadurch gekennzeichnet, dass** die Montage des Befestigungsgegenstands (2) am Befestigungsgrund (3) unter zusätzlicher Verwendung von Hilfselementen (22) erfolgt, die nicht durch den 3D-Drucker (7) erzeugt sind, insbesondere von Dübeln (27), Schrauben, Muttern (21), Haken, aushärtbaren Massen, Abstandshaltern, Profilen, Streben und/oder Isolierelementen.

8. Verfahren nach Anspruch 7, **dadurch gekennzeichnet, dass** mit dem Sensorsystem (5) Geometriedaten des Hilfselements (22), insbesondere einer Schraube (29), eines Nagels oder eines Dübels, erfasst werden und die Erzeugung der Elementdaten (14) in Abhängigkeit der Geometriedaten erfolgt.

## Claims

1. System for creating a fixing arrangement (1) with an article (2) to be fixed on a fixing substrate (3), wherein the fixing substrate (3) is a wall, a ceiling, a floor or some other structural element, having
- a sensor system (5) for sensor-based capture of situation data (13) of a fixing situation,
- a computer-assisted expert system (6) for generating digital element data (14) of an element (15) for the fixing in dependence upon the situation data (13) and
- a 3D printer (7) for creating the element (15) for the fixing in dependence upon the element data (14), wherein the sensor system (5) is suitable for capturing situation data (13) which include information relating to
- the fixing substrate (3), especially a surface geometry and/or a drilled hole position and/or a reference position to be specified by the user and/or a drilled hole geometry and/or a type of material, and/or
- a user-specified desired spacing from and/or desired position on the fixing substrate (3) for the article (2) to be fixed.

2. System according to claim 1, **characterised in that** the sensor system (5) and/or the expert system (6) has an input and output unit (11) for the operator.

3. System according to claim 1 or 2, **characterised in that** the sensor system (5) has a camera (10), a laser scanner, an endoscope (30) and/or a probe.

4. System according to any one of the preceding claims, **characterised in that** the expert system (6) and at least parts of the sensor system (5) are integrated in a device, especially in a mobile telephone or a mobile computer (9).

5. System according to any one of the preceding claims, **characterised in that** the expert system (6) is suitable for generating mounting instructions for the creation of the fixing arrangement (1) in dependence upon the situation data (13) and element data (14).

6. Method for creating a fixing arrangement (1) with an article (2) to be fixed on a fixing substrate (3), wherein the fixing substrate (3) is a wall, a ceiling, a floor or some other structural element, especially using a system according to any one of the preceding claims, having the following steps:
- sensor-based capture of situation data (13) of a fixing situation using a sensor system (5),
- generation of digital element data (14) of an element (15) for the fixing in dependence upon the situation data (13) using a computer-assisted expert system (6),
- creation of an element (15) for the fixing in dependence upon the element data (14) using a 3D printer (7),
- mounting of the article (2) to be fixed on the fixing substrate (3) using the element (15) for the fixing.

7. Method according to claim 6, **characterised in that** the mounting of the article (2) to be fixed on the fixing substrate (3) is effected additionally using auxiliary elements (22) which have not been created by the 3D printer (7), especially fixing plugs (27), screws, nuts (21), hooks, curable compositions, spacers, profiles, struts and/or insulating elements.

8. Method according to claim 7, **characterised in that** the sensor system (5) is used to capture geometric data of the auxiliary element (22), especially a screw (29), a nail or a fixing plug, and the generation of the element data (14) is effected in dependence upon the geometric data.

## Revendications

1. Système de création d'un ensemble de fixation (1) avec un objet à fixer (2) sur un support de fixation (3), sachant que le support de fixation (3) est un mur, un plafond, un sol ou un autre corps de construction, présentant
- un système de détection (5) pour l'acquisition sensorielle de données de situation (13) d'une situation de fixation,
- un système expert (6) assisté par ordinateur pour la production de données d'élément numériques (14) d'un élément (15) destiné à la fixation en fonction des données de situation (13), et
- une imprimante 3D (7) pour la production de l'élément (15) destiné à la fixation en fonction des données d'élément (14), sachant que le système de détection (5) est apte à acquérir des données de situation (13) qui comprennent des informations sur le support de fixation (3), en particulier une géométrie de surface et/ou une position de trou percé et/ou une position de référence à spécifier par l'utilisateur et/ou une géométrie de trou percé et/ou un type de matériau de construction,
et/ou
- une distance de consigne par rapport au support de fixation (3) et/ou une position de consigne sur le support de fixation (3), à spécifier par l'utilisateur, pour l'objet à fixer (2).

2. Système selon la revendication 1, **caractérisé en ce que** le système de détection (5) et/ou le système expert (6) présente une unité d'entrée/sortie (11) pour l'opérateur.

3. Système selon la revendication 1 ou 2, **caractérisé en ce que** le système de détection (5) présente une caméra (10), un scanneur laser, un endoscope (30) et/ou un palpeur.

4. Système selon l'une des revendications précédentes, **caractérisé en ce que** le système expert (6) et au moins des parties du système de détection (5) sont intégrés dans un appareil, en particulier un téléphone portable ou un ordinateur portable (9).

5. Système selon l'une des revendications précédentes, **caractérisé en ce que** le système expert (6) est apte à créer des instructions de montage pour la création de l'ensemble de fixation (1) en fonction des données de situation (13) et des données d'élément (14).

6. Procédé de création d'un ensemble de fixation (1) avec un objet à fixer (2) sur un support de fixation (3), sachant que le support de fixation (3) est un mur, un plafond, un sol ou un autre corps de construction, en particulier en utilisant un système selon l'une des revendications précédentes, avec les étapes suivantes :
- acquisition sensorielle de données de situation (13) d'une situation de fixation avec un système de détection (5),
- production de données d'élément numériques (14) d'un élément (15) destiné à la fixation en fonction des données de situation (13) avec un système expert (6) assisté par ordinateur,
- production d'un élément (15) destiné à la fixation en fonction des données d'élément (14) avec une imprimante 3D (7),
- montage de l'objet à fixer (2) sur le support de fixation (3) en utilisant l'élément (15) destiné à la fixation.

7. Procédé selon la revendication 6, **caractérisé en ce que** le montage de l'objet à fixer (2) sur le support de fixation (3) s'effectue avec l'utilisation supplémentaire d'éléments auxiliaires (22) qui ne sont pas produits par l'imprimante 3D (7), en particulier de chevilles (27), de vis, d'écrous (21), de crochets, de pâtes durcissables, d'écarteurs, de profilés, de renforts et/ou d'éléments isolants.

8. Procédé selon la revendication 7, **caractérisé en ce qu'**on acquiert avec le système de détection (5) des données géométriques de l'élément auxiliaire (22), en particulier une vis (29), un clou ou une cheville, et la production des données d'élément (14) s'effectue en fonction des données géométriques.
